# EUROPEAN PATENT SPECIFICATION

(11) **EP 0 360 241 B1**
(45) Date of publication and mention of the grant of the patent: **07.06.1995**
(21) Application number: 89117380.9
(22) Date of filing: 20.09.1989
(51) Int. Cl.: H04B 7/17, H04L 25/14

(54) **Error correction system in a multicarrier radio transmission system**
Fehlerkorrektursystem für Mehrträger Funkübertragungssystem
Système de correction d'erreurs pour système de transmission hertzien à porteuses multiples

(30) Priority: 20.09.1988 JP 236010/88
(43) Date of publication of application: 28.03.1990
(73) Proprietor: FUJITSU LIMITED, Kawasaki-shi, Kanagawa 211 (JP)
(72) Inventor: Hodohara, Kiyoaki, Otawara-shi Tochigi 234 (JP)
(74) Representative: Lehn, Werner, Dipl.-Ing.

(56) References cited:
- EP-A- 0 164 749
- FR-A- 2 494 528
- GB-A- 2 147 177
- PATENT ABSTRACTS OF JAPAN, vol. 8, no. 53 (E-231)[1490], 9th March 1984;& JP-A-58 206 255

## Description

### Background of the Invention

### Field of the Invention

This invention relates to a multicarrier radio transmission system and, in particular, to an error correcting method in the radio transmission system.

Recent radio transmission systems with their increasing transmission capacities tend to use multilevel or multi-carrier schemes. They also require forward error correction to improve the system gain. Some synchronization is needed for such error correction. In particular, synchronism must be held where the error rate is as high as about 10⁻².

### Description of the Prior Art

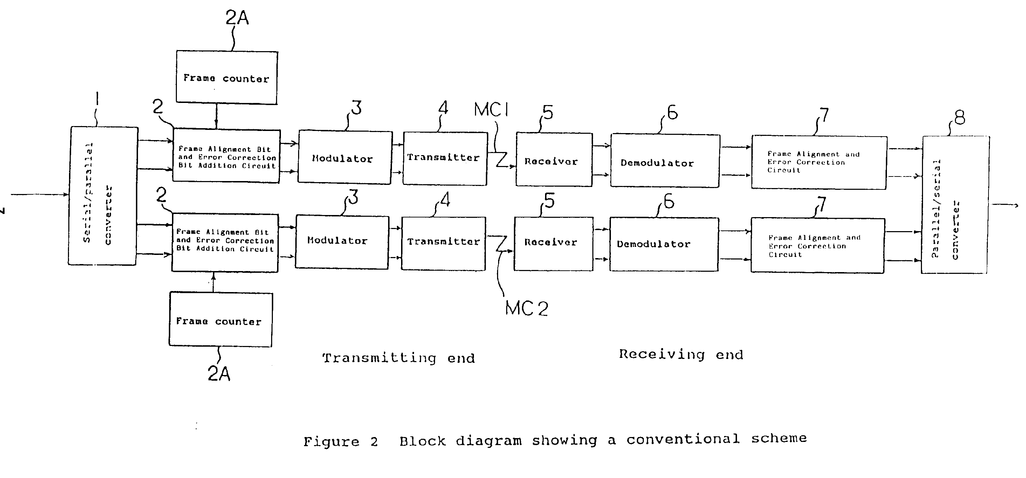

Figure 2 is a block diagram of a conventional scheme. In this figure component 1 is a serial/parallel converter; component 2 is a frame alignment bit and error correction bit addition circuit; component 2A is a frame counter; component 3 is a modulator; component 4 is a transmitter. These circuits are provided at the transmitting end. Frame alignment bit and error correction bit addition circuit 2, frame counter 2A, modulator 3, and transmitter 4 are provided in two sets.

For example, when a 100 Mb/s signal is fed to serial/parallel converter 1, it is branched to four 25 Mb/s signals. Each combination of two 25 Mb/s signals is fed to frame alignment bit and error correction bit addition circuit 2, where a frame alignment bit is added. The position of frame alignment bit addition and error correction bit addition are controlled by frame counter 2A provided for each frame alignment bit and error correction bit addition circuit 2.

The signal from each frame alignment bit and error correction bit addition circuit 2 is fed to modulator 3 to achieve 4PSK for example, then is transmitted on a carrier depending on transmitter 4. In this example, one 100 Mb/s signal is radio transmitted on two separate carriers.

Component 5 is a receiver; component 6 is a demodulator; component 7 is a frame alignment and error correction circuit; component 8 is a parallel/serial converter. These circuits are provided at the receiving end. Receiver 5, demodulator 6, and frame alignment and error correction circuit 7 are provided in two sets corresponding to as many carriers.

The signal on each carrier enters receiver 5, is demodulated by demodulator 6, and is fed to frame alignment and error correction circuit 7, where frame alignment is established. Error correction is performed using the error correction bit and according to the established alignment position.

The signal from each frame alignment and error correction circuit 7 is fed to parallel/serial converter 8, which converts the four 25 Mb/s signals into a 100 Mb/s signal.

The above conventional scheme, however, involves the following problem. Among two radio transmission carriers MC1 and MC2, if carrier MC2 is considerably deteriorated, frame alignment is lost at frame alignment and error correction circuit 7 corresponding to carrier MC2. As a result, error correction becomes impossible on the MC2 signal. This causes the error rate of the 100 Mb/s output to be 1/4, thus lowering the system gain.

A system having the features of the preamble of claim 1 is known from EP-A-0 164 749.

In GB-A-2 147 177 there is shown a parallel data transmission system in which error correction data may be taken from a neighbouring channel.

### Summary of the Invention

This invention is aimed to provide an error correction method for multicarrier radio transmission systems in order to solve the above problem involved in the conventional scheme. According to the present invention there is provided a system as defined in claim 1. If one of multiple radio transmission circuits is considerably deteriorated, the method allows error correction to be performed by keeping frame alignment for the signal on the deteriorated circuit.

This error correction method for multicarrier radio transmission systems is notable for its frame alignment detection code addition circuits which are configured so that they are controlled by a common frame counter and its frame alignment and error correction circuits which are configured so that they are supplied with different carrier signals.

In this configuration, each frame alignment detection code addition circuit at the transmitting end adds a code for frame alignment detection to the signal; the frame alignment detection code and bit for error detection addition circuits are controlled by a common frame counter so that they insert codes for frame alignment detection and a bit for error correction at an identical position.

At the receiving end, different carrier signals are fed to the frame alignment and error correction circuits.

Even if some of the multiple radio transmission circuits are considerably deteriorated, frame alignment can be established using the carrier signal from a transmission circuit which is not deteriorated because the frame alignment and error correction circuits are supplied with different carrier signals. This permits the deteriorated transmission circuit to keep frame alignment and allows errors to be corrected on that transmission circuit.

### Brief Description of the Drawings

Figure 1 is a block diagram showing one embodiment of this invention.

Figure 2 is a block diagram showing a conventional scheme.

### Description of the Preferred of the Invention

An embodiment of this invention is described below with reference to a drawing.

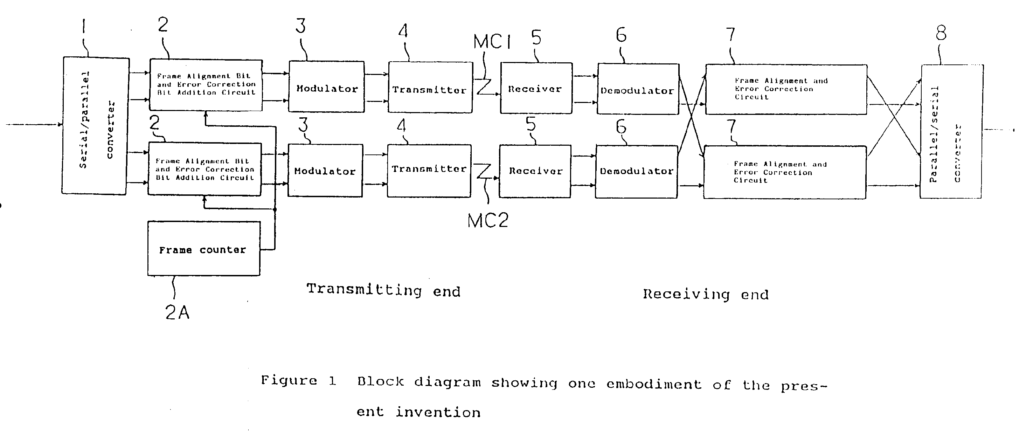

Figure 1 is a block diagram showing an embodiment of this invention. In Figure 1, the transmitting end is provided with serial/parallel converter 1, frame alignment bit and error correction bit addition circuit 2, frame counter 2A, modulator 3, and transmitter 4. Two sets of frame alignment bit and error correction bit addition circuits 2, modulator 3, and transmitter 4 are provided. Frame counter 2A serves two frame alignment bit and error correction bit addition circuits 2. As a result, the positions of frame alignment bit insertion are identical on both signals.

The receiving end is provided with receiver 5, demodulator 6, frame alignment and error correction circuit 7, and parallel/serial converter 8. Receiver 5, demodulator 6, and frame alignment and error correction circuit 7 are provided in two sets corresponding to as many carriers.

Frame alignment and error correction circuits 7 are designed so that they are supplied with different carrier signals. If one of radio transmission carriers MC1 and MC2 is considerably deteriorated, frame alignment and error correction circuits 7 are still supplied with different carrier signals.

At the transmitting end in the above configuration, serial/parallel converter 1 branches a 100 Mb/s signal (for example) into four 25 Mb/s signals. The combination of two 25 Mb/s signals is fed to frame alignment bit and error correction bit addition circuit 2, where a frame alignment bit is added to each of the two signals. Frame alignment bit and error correction bit addition circuits are controlled by common frame counter 2A so that the frame alignment bit and error correction bit are inserted at an identical position on both signals.

The signal from each frame alignment bit and error correction bit addition circuit 2 is fed to modulator 3 to achieve 4PSK for example, then is transmitted on a carrier depending on transmitter 4. In this example, one 100 Mb/s signal is radio transmitted on two carriers.

At the receiving end, the signal on each carrier is fed to receiver 5, is demodulated by demodulator 6, and is fed to frame alignment and error correction circuit 7, which establishes frame alignment and corrects errors using the error correction bit and according to the established alignment position.

The signal from each frame alignment and error correction circuit 7 is fed to parallel/serial converter 8, which converts the four 25 Mb/s signals into one 100 Mb/s signal.

Suppose that one -- MC1 for example -- of multiple radio transmission carriers MC1 and MC2 is considerably deteriorated. Since frame alignment and error correction circuits are still supplied with different carrier signals, frame alignment can be established using the intact carrier signal although a half of the input data is deteriorated. Therefore, the deteriorated transmission carrier MC1 can still keep frame alignment. Error correction is thus possible on the signal from the deteriorated transmission circuit. This helps increase the system gain.

In the stage of error correction, frame alignment is established according to the position of frame alignment bit insertion; however, it is also possible to detect frame alignment according to another appropriate code. For the latter scheme, frame alignment detection code addition circuits are provided to add a code for frame alignment detection in place of the frame alignment bit and error correction bit addition circuits. As in the case of the above embodiment, these frame alignment detection code addition circuits are controlled by a common frame counter.

It is to be understood that the foregoing description is merely illustrative of the preferred embodiments of the present invention, but that the present invention is not to be limited thereto, but is to be determined by the scope of the appended claim.

Reference signs in the claims are intended for better understanding and shall not limit the scope.

## Claims

1. An error correction system in a multicarrier radio transmission system, comprising;
(a) input means (1) for providing a plurality of combinations of parallel data signals;
(b) a plurality of frame alignment bit and error correction bit addition circuits (2), operatively connected to said input means, for adding frame alignment bits and error correction bits to the data signals respectively and outputting framed data signals;
(c) frame timing providing means (2A), operatively connected to each of said addition circuits, for controlling the position of the frame alignment bits commonly to the data signals;
(d) a plurality of modulators (3), operatively connected to said addition circuits, for modulating a plurality of carriers, which have different frequencies from each other, each modulator being operable to modulate one carrier by one combination of the framed data signals and outputting modulated signals;
(e) transmitter means (4), operatively connected to the modulators, for transmitting the modulated signals;
(f) receiver means (5), operatively connected to the transmitter means, for receiving the transmitted signals and outputting a plurality of received signals corresponding to the plurality of carriers;
(g) a plurality of demodulators (6), operatively connected to the receiver means, for demodulating the received signals and outputting demodulated data signals; and characterised in that the system further comprises a plurality of frame alignment and error correcting circuits (7), each being operatively connected to at least two of the demodulators to receive at least two of the demodulated data signals for establishing frame alignment and correcting errors in the demodulated data signals using the error correction bits respectively, wherein, while frame alignment of a first of the demodulated data signals is not established, error correction of the first of the demodulated data signals is done based on frame alignment of the second demodulated data signal.

2. An error correction system as set forth in claim 1, wherein said frame timing providing means (2A) is a frame counter, which indicates timing for adding frame alignment bits.

3. An error correction system as set forth in claim 1, wherein each of said parallel data signals consists of a plurality of bits.

4. An error correction system as set forth in claim 3, wherein said input means (1) is a serial-to-parallel converter, which inputs serial signals and outputs m x n bits parallel signals.

5. An error correction system as set forth in claim 4, wherein said addition circuits (2) comprise m frame alignment bit addition circuits, each of which inputs n bits parallel signals.

## Patentansprüche

1. Fehlerkorrektursystem in einem Funkübertragungssystem mit mehreren Trägern, mit
(a) Eingabeeinrichtungen (1) zum Vorsehen einer Vielzahl von Kombinationen von parallelen Datensignalen;
(b) eine Vielzahl von Rahmenausrichtungs- und Fehlerkorrekturbitadditionsschaltkreisen (2), welche betriebsmäßig mit den Eingabeeinrichtungen verbunden sind, um Rahmenausrichtungsbits und Fehlerkorrekturbits jeweils den Datensignalen hinzuzuaddieren, und gerahmte Datensignale auszugeben;
(c) Rahmenzeitvorgabeeinrichtungen (2A), die betriebsmäßig mit jedem der Additionsschaltkreise verbunden sind, um die Position der Rahmenausrichtungsbits den Datensignalen cemeinsam zu steuern;
(d) einer Vielzahl von Modulatoren (3), die betriebsmäßig mit den Additionsschaltkreisen verbunden sind, um eine Vielzahl von Trägern zu modulieren, welche voneinander verschiedene Frequenzen haben, wobei jeder Modulator betreibbar ist, einen Träger mittels einer Kombination der gerahmten Datensignale zu modulieren, und modulierte Signale auszugeben;
(e) Sendereinrichtungen (4), die betriebsmäßig mit Modulatoren verbunden sind, um die modulierten Signale zu übertragen;
(f) Empfängereinrichtungen (5), die betriebsmäßig mit den Sendereinrichtungen verbunden sind, um die übertragenen Signale zu empfangen und eine Vielzahl von empfangenen Signalen entsprechend der Vielzahl von Trägern auszugeben;
(g) einer Vielzahl von Demodulatoren (6), die betriebsmäßig mit den Empfängereinrichtungen verbunden sind, um die empfangenen Signale zu demodulieren und demodulierte Datensignale auszugeben; und dadurch gekennzeichnet, daß das System ferner eine Vielzahl von Rahmenausrichtungs- und Fehlerkorrekturschaltkreisen (7) umfaßt, von denen jeder betriebsmäßig mit wenigstens zwei der Demodulatoren verbunden ist, um wenigstens zwei der demodulierten Datensignale zu empfangen, um eine Rahmenausrichtung herzustellen, und Fehler in den demodulierten Datensignalen jeweils unter Verwendung der Fehlerkorrekturbits zu korrigieren, worin, während eine Rahmenausrichtung eines ersten der demodulierten Datensignale nicht hergestellt ist, eine Fehlerkorrektur des ersten der demodulierten Datensignale auf der Grundlage der Rahmenausrichtung des zweiten demodulierten Datensignals durchgeführt wird.

2. Fehlerkorrektursystem nach Anspruch 1, dadurch gekennzeichnet, daß die Rahmenzeitvorgabeeinrichtung (2A) ein Rahmenzähler ist, welcher eine Zeitgabe zum Hinzuaddieren von Rahmenausrichtungsbits anzeigt.

3. Fehlerkorrektursystem nach Anspruch 1, dadurch gekennzeichnet, daß jedes der parallelen Datensignale aus einer Vielzahl von Bits besteht.

4. Fehlerkorrektursystem nach Anspruch 3, dadurch gekennzeichnet, daß die Eingabeeinrichtung (1) ein Seriell-/Parallelwandler ist, welcher serielle Signale eingibt und m x n Bit parallele Signale ausgibt.

5. Fehlerkorrektursystem nach Anspruch 4, dadurch gekennzeichnet, daß die Additionsschaltkreise (2) m Rahmenausrichtungsbits-Additionsschaltkreise umfassen, von denen jeder n Bit parallele Signale eingibt.

## Revendications

1. Système de correction d'erreurs dans un système de transmission radioélectrique à porteuses multiples comprenant :
(a) un moyen d'entrée (1) pour fournir plusieurs combinaisons de signaux de données parallèles ;
(b) plusieurs circuits d'ajout de bit de verrouillage de trame et de bit de correction d'erreurs (2), connectés de manière fonctionnelle audit moyen d'entrée pour ajouter, respectivement, des bits de verrouillage de trame et des bits de correction d'erreurs aux signaux de données et pour sortir des signaux de données à trames ;
(c) un moyen fournissant un rythme de trame (2A), connecté de manière fonctionnelle à chacun desdits circuits d'ajout, pour commander la position des bits de verrouillage de trame de manière commune pour les signaux de données ;
(d) plusieurs modulateurs (3), connectés de manière fonctionnelle auxdits circuits d'ajout pour moduler plusieurs porteuses qui ont des fréquences différentes les unes des autres, chaque modulateur servant à moduler une porteuse par une combinaison des signaux de données à trames et à sortir des signaux modulés ;
(e) des moyens d'émission (4), connectés de manière fonctionnelle aux modulateurs pour émettre les signaux modulés ;
(f) des moyens de réception (5) , connectés de manière fonctionnelle aux moyens d'émission pour recevoir les signaux émis et pour sortir plusieurs signaux reçus correspondant aux différentes porteuses ;
(g) plusieurs démodulateurs (6), connectés de manière fonctionnelle aux moyens de réception pour démoduler les signaux reçus et pour sortir des signaux de données démodulés ; et caractérisé en ce que le système comprend en outre plusieurs circuits de verrouillage de trame et de correction d'erreurs (7), chacun étant connecté de manière fonctionnelle à au moins deux des démodulateurs pour recevoir au moins deux des signaux de données démodulés pour établir le verrouillage de trame et pour corriger les erreurs dans les signaux de données démodulés en utilisant, respectivement, les bits de correction d'erreurs, dans lequel, lorsque le verrouillage de trame d'un premier des signaux de données démodulés ne s'établit pas, la correction d'erreurs du premier des signaux de données démodulés est effectuée en se basant sur le verrouillage de trame du second signal de données démodulé.

2. Système de correction d'erreurs selon la revendication 1, dans lequel ledit moyen fournissant un rythme de trame (2A) est un compteur de trames qui indique un rythme pour ajouter des bits de verrouillage de trame.

3. Système de correction d'erreurs selon la revendication 1, dans lequel chacun desdits signaux de données parallèles est constitué de plusieurs bits.

4. Système de correction d'erreurs selon la revendication 3, dans lequel ledit moyen d'entrée (1) est un convertisseur de série en parallèle, qui entre des signaux série et qui sort des signaux parallèles de mxn bits.

5. Système de correction d'erreurs selon la revendication 4, dans lequel lesdits circuits d'ajout (2) comprennent m circuits d'ajout de bit de verrouillage de trame, dont chacun entre des signaux parallèles de n bits.
